# EUROPEAN PATENT APPLICATION

(11) **EP 4 497 626 A1**
(43) Date of publication of application: **29.01.2025**
(21) Application number: 22932943.8
(22) Date of filing: 15.07.2022
(51) Int. Cl.: B60N 2/10, B60N 2/42, B60N 2/427

(54) **ZERO-GRAVITY SEAT CAPABLE OF QUICKLY RETURNING AFTER COLLISION**

(30) Priority: 21.03.2022 CN 202220609263 U
(71) Applicant: Yanfeng International Automotive Technology Co., Ltd., Shanghai 201306 (CN)
(72) Inventor: WANG, Zhenhua, Shanghai 201306 (CN); CHEN, Xu, Shanghai 201306 (CN); WANG, Longmei, Shanghai 201306 (CN); TANG, Xun, Shanghai 201306 (CN)
(74) Representative: Specht, Peter
(86) International application number: PCT/CN2022/105997
(87) International publication number: WO 2023/178891

(57) **Abstract**

A zero-gravity seat with quick restoration during collision comprises a side plate (210), a mounting bottom plate (500), an upper link (710) and a composite link (720), wherein a rear end of the mounting bottom plate is hinged with the side plate at a mid-rear position of the side plate, and one end of the upper link is hinged with the side plate at a mid-front position of the side plate. The composite link comprises a basic link (721), an energy-absorbing link (722), a locking and unlocking mechanism (723), and an energy-absorbing structure (722f), wherein a first end of the basic link is hinged with the mounting bottom plate, the first end of the energy-absorbing link is hinged with the other end of the upper link, and the basic link is hinged with the energy-absorbing link. The locking and unlocking mechanism is configured to lock and unlock the energy-absorbing link. During a relative rotation of the basic link and the energy-absorbing link after the locking and unlocking mechanism unlocks the energy-absorbing link, the energy-absorbing structure absorbs energy. The zero-gravity seat can be quickly restored from a zero-gravity position in a collision event, wherein the collision energy is absorbed to ensure the safety of the passenger.

## Description

### TECHNICAL FIELD

The present invention relates to the technical field of seats, in particular to a zero-gravity seat with quick restoration during collision.

### BACKGROUND OF INVENTION

In practice, zero-gravity seats for motor vehicles are known, which may have the functions of an adjustment of a backrest angle, an adjustment of an extension length and an angle of a leg rest, an adjustment of a height and an angle of a seat frame, and the like. Due to the various adjustments of such automobile seats, a passenger can adjust the posture of the seat according to his own feeling, thereby reducing his joint tension and improving his driving comfort.

In a zero-gravity seat, a height and an angle of a seat frame (a seat cushion framework) have a large influence on the passenger's comfort. In the common prior art, both a height adjustment and an angle adjustment are typically based on a four-link mechanism, wherein the height adjustment may be based on a parallelogram four-link mechanism, wherein a front and a rear end of the seat frame are respectively connected with a base part through links, wherein the whole seat frame is raised and lowered through rotation of the links. In the case where the height adjustment and the angle adjustment are independent of each other, the structure of the seat frame may be complicated.

In addition, it is known that there may be problems of insufficient adjustability and insufficient comfort for an angle adjustment of a seat frame. The Patent Literature CN209176548U discloses a seat pitch adjustment device, which comprises a seat frame, a drive rod and a drive mechanism, wherein the drive rod is arranged at a front end of the seat frame and is movable up and down by means of the drive mechanism, wherein the seat frame is rotatable through a first link at a rear end of the seat frame, wherein two ends of the drive rod are rotatably arranged on the seat frame, and the drive rod does not slide relative to the seat frame. The drive mechanism comprises a gear toothed-plate mechanism and a connection plate, wherein a toothed plate is fixedly connected with the drive rod, and the connection plate is hinged between the toothed plate and a slide rail below the seat frame. A mechanical model for the seat cushion framework of the automobile seat is a four-link mechanism comprising the slide rail of the seat, the connection plate, the toothed plate and the drive rod, and the seat frame. For a stable rotation of the seat frame, the gear toothed-plate mechanism is arranged at an end of the drive rod at the front end of the seat frame, and the other end of the drive rod is also connected with the slide rail through the link mechanism. It's found in actual tests, a seat frame portion on a side adjacent to the adjusting motor can be kept stable well, but a seat frame portion on a side away from the adjusting motor has a small range of movement. Especially in a posture of the seat frame having a large inclination and in the situation that the center of gravity of the passenger is close to the rear end of the seat frame, this small range of movement may affect the driving comfort. This problem may be resolved by the measurement that the number of the actuating motors and rack-and-pinion mechanisms is increased, which improves the stability, but the costs are also increased and the control system becomes more complicated.

The Chinese patent application CN113352961A discloses an adjustment system for a seat frame of a zero-gravity seat, wherein a respective link mechanism having two links is arranged between a base part and a left and a right side of a front end of the seat frame, wherein the two link mechanisms are each provided with a rotation driving mechanism, wherein the rotation driving mechanism may be connected with any one of the links of the respective link mechanism, wherein the two rotation driving mechanisms are bilaterally symmetrical, wherein a synchronous rotation rod is arranged between and connected to the two rotation driving mechanisms, and is provided with a driving device for an inclination adjustment.

The Chinese utility model CN213007718U discloses a seat lifting mechanism and a system, by which a risk of collision failure can be reduced, wherein an angle-adjuster motor is provided on one side of the seat to adjust a height position of a seat, and a buffer with a variable damping is mounted on the other side of the seat. When a collision occurs, the side opposite to the angle-adjuster motor sinks due to insufficient rigidity, and at this time, the buffer can reduce the impact.

However, the automobile seats in the above-mentioned prior art are complicated in structure and high in costs and are difficult to be quickly restored when the automobile seats are at a zero-gravity position in a collision event.

### SUMMARY OF INVENTION

Directed to defects in the prior art, an object of the present invention is to provide a zero-gravity seat with quick restoration during collision, which has a simple structure and can be quickly restored to an initial position when a collision occurs at a zero-gravity position of the zero-gravity seat.

In order to achieve the above-mentioned object of the invention, the zero-gravity seat with quick restoration during collision according to the present invention comprises:
- a side plate, which is a component of a seat cushion framework of the zero-gravity seat, and which is hinged position-fixedly at its mid-rear position,
- optionally, a mounting bottom plate, wherein a rear end of the mounting bottom plate is hinged to the side plate at a mid-rear position of the side plate,
- an upper link, wherein an end of the upper link is hinged to the side plate at a mid-front position of the side plate,
- a composite link comprising a basic link, an energy-absorbing link, a locking and unlocking mechanism and an energy-absorbing structure, wherein the basic link is hinged position-fixedly at a first end thereof, preferably hinged with the mounting bottom plate through a front angle adjuster, wherein a first end of the energy-absorbing link is hinged with the other end of the upper link, wherein the basic link is hinged with the energy-absorbing link, wherein the locking and unlocking mechanism is configured to lock and unlock the energy-absorbing link, wherein in a locking state of the locking and unlocking mechanism the energy-absorbing link is fixedly connected with the basic link, and in an unlocking state of the locking and unlocking mechanism the energy-absorbing link and the basic link are rotatable relatively about a hinged connection of the energy-absorbing link with the basic link, wherein in a collision event, starting from a zero-gravity posture of the zero-gravity seat, during a relative rotation of the basic link and the energy-absorbing link after the energy-absorbing link is unlocked by the locking and unlocking mechanism, the energy-absorbing structure takes an energy-absorbing effect and the zero-gravity seat is quickly restored to an initial position.

In this application, the term "quick restoration during collision" may be understood as that, starting from any position different from the initial position, especially the zero-gravity position, of the zero-gravity seat, the zero-gravity seat can be quickly restored to its initial position in a collision event.

In this application, the term "mid-rear position of the side plate" may be understood as a position in a rear half of the side plate, preferably a position in a rear end section of the side plate. Preferably, a length of the rear end section is no more than 1/3, preferably no more than 1/4, of a full length of the side plate.

In this application, the term "mid-front position of the side plate" may be understood as a position in a front half of the side plate, preferably in a front end section of the side plate. Preferably, a length of the front end section is no more than 1/3, preferably no more than 1/4, of a full length of the side plate.

In a preferred embodiment of the present invention, one of the basic link and the energy-absorbing link, preferably the energy-absorbing link, is provided with the energy-absorbing structure, and the other of the basic link and the energy-absorbing link, preferably the basic link, is provided with a squeezing element, wherein during the relative rotation of the basic link and the energy-absorbing link, the squeezing element carried by the other link moves into the energy-absorbing structure carried by the one link.

In a preferred embodiment of the present invention, the squeezing element is a stepped screw bolt or a pin.

In a preferred embodiment of the present invention, a first angle-adjuster mounting hole is provided at a front end of the mounting bottom plate, and a second angle-adjuster mounting hole is provided at a first end of the basic link, wherein the front angle adjuster is, with its one axial end, mounted in the first angle-adjuster mounting hole and anchored or welded with the mounting bottom plate, and is, with its other axial end, mounted in the second angle-adjuster mounting hole and anchored or welded with the basic link.

In a preferred embodiment of the present invention, a first end of the energy-absorbing link is hinged with the other end of the upper link through a first stepped screw bolt.

In a preferred embodiment of the present invention, a second end of the energy-absorbing link is hinged with the basic link at a middle position of the basic link through a second stepped screw bolt, wherein the first end and the second end of the energy-absorbing link are two opposite ends of the energy-absorbing link in its length direction.

In a preferred embodiment of the present invention, the locking and unlocking mechanism is mounted to the basic link, preferably at a middle position of the basic link.

In a preferred embodiment of the present invention, the locking and unlocking mechanism comprises a piston-type lock tongue.

In a preferred embodiment of the present invention, a lock hole is provided in the energy-absorbing link, preferably at the second end of the energy-absorbing link, wherein in the locking state of the locking and unlocking mechanism the piston-type lock tongue is inserted into the lock hole for locking the basic link with the energy-absorbing link, wherein in the unlocking state of the locking and unlocking mechanism the piston-type lock tongue is retreated from the lock hole for unlocking the basic link from the energy-absorbing link.

In a preferred embodiment of the present invention, the piston-type lock tongue is driven by a high-pressure gas generated by ignition, or by an electric push-pull mechanism, a pneumatic push-pull mechanism, or an electromagnetic mechanism.

In a preferred embodiment of the present invention, the locking and unlocking mechanism and the lock hole are arranged above a hinged connection of the energy-absorbing link with the basic link.

In a preferred embodiment of the present invention, a mounting screw hole for an energy-absorbing screw bolt is provided in the basic link, preferably at a second end of the basic link; a through hole for the energy-absorbing screw bolt is provided in the energy-absorbing link, preferably at a middle position of the energy-absorbing link; wherein the energy-absorbing structure is arranged at a middle position of the energy-absorbing link; wherein the energy-absorbing screw bolt passes through the through hole for the energy-absorbing screw bolt and is screwed into the mounting screw hole for the energy-absorbing screw bolt, wherein during the relative rotation of the basic link and the energy-absorbing link after the energy-absorbing link is unlocked by the locking and unlocking mechanism, the energy-absorbing screw bolt interacts with the energy-absorbing structure, so that the energy absorption is achieved by means of the energy-absorbing structure.

In a preferred embodiment of the present invention, the energy-absorbing structure is arranged above the through hole for the energy-absorbing screw bolt.

In a preferred embodiment of the present invention, the energy-absorbing structure is a tearable energy-absorbing structure or a squeezable energy-absorbing structure.

In a preferred embodiment of the present invention, the energy-absorbing structure comprises a plurality of arc-shaped tabs and a plurality of arc-shaped grooves which alternate with each other, wherein during the relative rotation of the basic link and the energy-absorbing link, the squeezing element carried by the other link squeezes and breaks the arc-shaped tabs sequentially.

In a preferred embodiment of the present invention, the energy-absorbing structure comprises a slot with a width smaller than a diameter of a squeezing element, wherein during the relative rotation of the basic link and the energy-absorbing link, the squeezing element carried by the other link squeezes and deforms the slot and thus enlarge the width of the slot. In a preferred embodiment of the present invention, a rear end of the mounting bottom plate is hinged with the side plate at a mid-rear position of the side plate through a third stepped screw bolt.

In a preferred embodiment of the present invention, the number of the side plates is two, wherein the two side plates are arranged in the seat cushion framework in a bilaterally symmetrical manner; and/or the number of the mounting bottom plates is two, wherein the two mounting bottom plates are fixed to a seat bracket in a bilaterally symmetrical manner; and/or the two side plates are connected at their rear ends through a rear pipe, and/or the two side plates are connected at their front sides through a front pipe; and/or the number of the upper links is two, the number of the composite links is two and/or the number of the front angle adjusters is two. In a preferred embodiment of the present invention, the two upper links and the two composite links are respectively arranged between one of the side plates and one of the mounting bottom plates in a bilaterally symmetrical manner; and/or the two front angle adjusters are connected through a synchronous rod for a synchronous rotation of the two front angle adjusters.

In a preferred embodiment of the present invention, the synchronous rod is driven rotatably by an angle-adjuster motor, wherein the two front angle adjusters are driven to rotate synchronously by the synchronous rod.

In a preferred embodiment of the present invention, the angle-adjuster motor is mounted on the side plate, especially on an inner side of the side plate.

In some embodiments, technical solutions of the present invention, in comparison with the prior art, may have the following advantages:
1. With the adoption of the seat cushion framework according to the embodiments of the present invention, the automobile seat can achieve a zero-gravity adjustment, and has a simple structure and a reliable operation.
2. By means of the locking and unlocking mechanism of the composite link, the zero-gravity seat can be quickly restored to ensure the passenger's safety, when a collision occurs at the zero-gravity position of the zero-gravity seat.
3. During the restoration caused by collision, the energy-absorbing structure can absorb the collision energy and reduce or avoid the injury to the passenger.

The technical features mentioned above, the technical features to be mentioned below and the technical features separately shown in the drawings can be arbitrarily combined with each other, only if the combined technical features are not contradictory. All the feasible combinations of the features are the technical contents clearly recited in the present application. Any one of the sub-features in a sentence can be applied independently, and must not be inevitably applied together with the other sub-features.

### BRIEF DESCRIPTION OF DRAWINGS

The present invention is described in more detail by means of exemplary embodiments with reference to the accompanying drawings. The drawings are briefly introduced as below:
Fig. 1 is an exploded schematic view of a zero-gravity seat (a backrest framework isn't shown) with quick restoration during collision according to an embodiment of the present invention.
Fig. 2 is a schematic perspective view of the zero-gravity seat of Fig. 1 (the backrest framework isn't shown).
Fig. 3 is an assembly schematic view of two side plates, a front pipe and a rear pipe of a seat cushion framework of the zero-gravity seat of Fig. 1.
Fig. 4 is a schematic side view of the zero-gravity seat of Fig. 1 (the backrest framework and the side plates aren't shown).
Fig. 5 is a schematic side view of the zero-gravity seat of Fig. 1 (the backrest framework isn't shown) in a perspective from inside to outside.

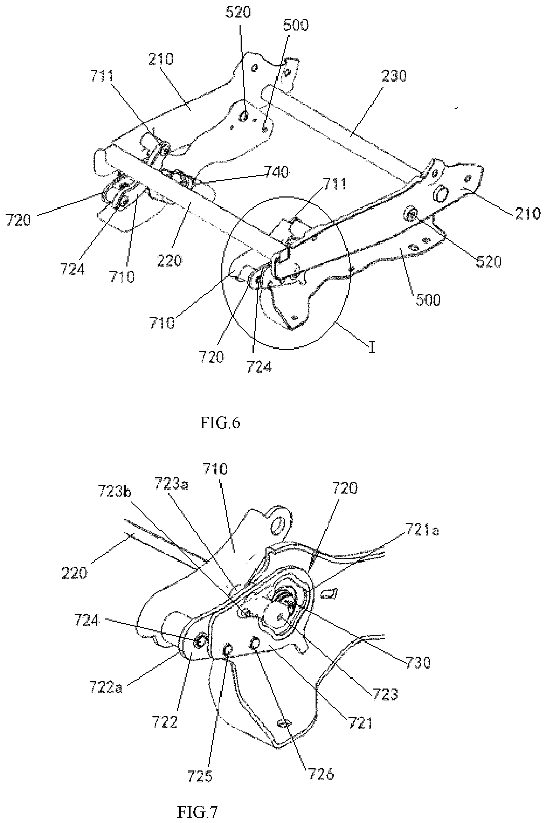

Fig. 6 is a schematic perspective view of the zero-gravity seat of Fig. 1 (the backrest framework isn't shown).
Fig. 7 is an enlarged schematic view of the portion I in Fig. 6.
Fig. 8 is a perspective structural view of a composite link according to an embodiment of the present invention.
Fig. 9 is a structural side view of the composite link of Fig. 8.
Fig. 10 is an exploded schematic view of the composite link of Fig. 8.
Fig. 11 is a schematic perspective view of the composite link of Fig. 8 in a locking state of a locking and unlocking mechanism.
Fig. 12 is a partial cross-sectional schematic view of the composite link of Fig. 8 in the locking state of the locking and unlocking mechanism.
Fig. 13 is a schematic perspective view of the composite link of Fig. 8 in an unlocking state of the locking and unlocking mechanism.
Fig. 14 is a partial cross-sectional schematic view of the composite link of Fig. 8 in the unlocking state of the locking and unlocking mechanism.
Fig. 15 is a schematic side view of the zero-gravity seat of Fig. 1 in an initial state (the backrest framework isn't shown) when the locking and unlocking mechanism is in the locking state.
Fig. 16 is a schematic side view of the zero-gravity seat of Fig. 1 in a zero-gravity state (the backrest framework isn't shown) when the locking and unlocking mechanism is in the locking state.
Fig. 17 is a schematic view showing a movement principle of the zero-gravity seat of Fig. 1 (the backrest framework isn't shown) when the locking and unlocking mechanism is in the locking state.
Fig. 18 is a schematic view showing the state of the zero-gravity seat of Fig. 1 before collision (the backrest framework isn't shown) when the locking and unlocking mechanism is in the locking state.
Fig. 19 is a schematic view showing the state of the composite link of Fig. 8 before collision when the locking and unlocking mechanism is in the locking state.
Fig. 20 is a schematic view showing the state of the zero-gravity seat of Fig. 1 after collision (the backrest framework isn't shown) when the locking and unlocking mechanism is in the unlocking state.
Fig. 21 is a schematic view showing the state of the composite link of Fig. 8 after collision when the locking and unlocking mechanism is in the unlocking state.
Fig. 22 is a schematic view showing the state of the zero-gravity seat of Fig. 1 (the backrest framework isn't shown) returning to a design position after collision when the locking and unlocking mechanism is in the unlocking state.
Fig. 23 is a schematic view showing the state of the composite link of Fig. 8 after collision and after energy absorption when the locking and unlocking mechanism is in the unlocking state.
Fig. 24 is a schematic view showing the movement principle of the zero-gravity seat of Fig. 1 after collision (the backrest framework isn't shown) when the locking and unlocking mechanism is in the unlocking state.
Fig. 25 is a schematic view showing the composite link of Fig. 8 in the initial state after collision when the locking and unlocking mechanism is in the unlocking state.
Fig. 26 is a schematic view of the composite link of Fig. 8 after collision and after energy absorption when the locking and unlocking mechanism is in the unlocking state.
Fig. 27 is a schematic view showing the composite link in the initial state when the locking and unlocking mechanism is in the unlocking state after collision according to another embodiment.
Fig. 28 is a schematic view of the composite link of Fig. 27 after energy absorption when the locking and unlocking mechanism is in the unlocking state after collision.
Fig. 29 is a schematic view showing the state of the zero-gravity seat of Fig. 1 in the design position.
Fig. 30 is a schematic view showing the state of the zero-gravity seat of Fig. 1 (the backrest framework isn't shown) in the design position.
Fig. 31 is a schematic view showing the state of the zero-gravity seat of Fig. 1 in the zero-gravity position.
Fig. 32 is a schematic view showing the state of the zero-gravity seat of Fig. 1 (the backrest framework isn't shown) in the zero-gravity position.
Fig. 33 is a schematic view showing the state of the zero-gravity seat of Fig. 1 returning to the design position after collision.
Fig. 34 is a schematic view showing the state of the zero-gravity seat of Fig. 1 (the backrest framework isn't shown) returning to the design position after collision.

### EMBODIMENTS

The present invention is further described with reference to the attached drawings and specific embodiments.

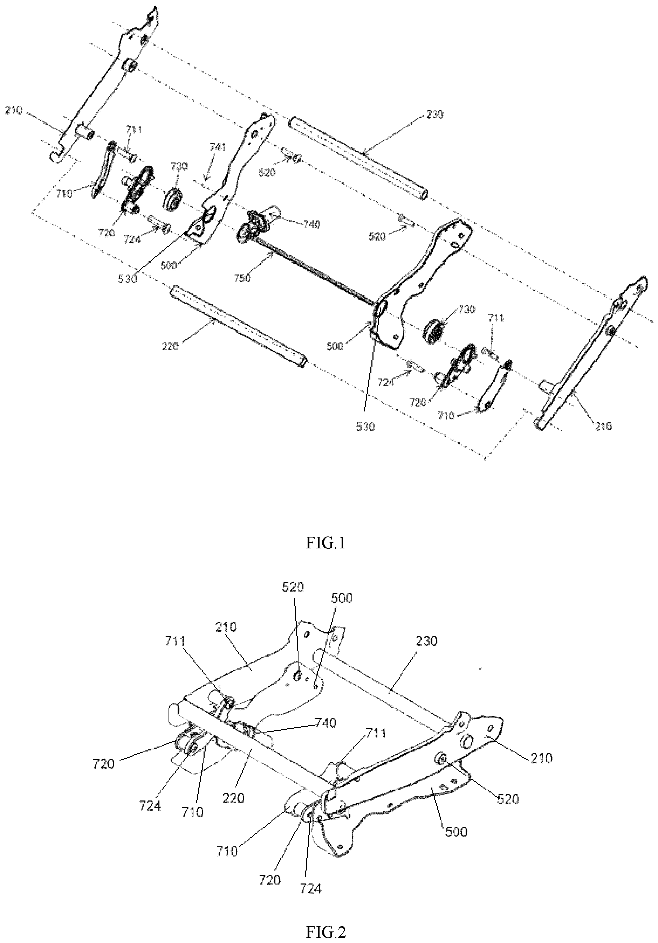

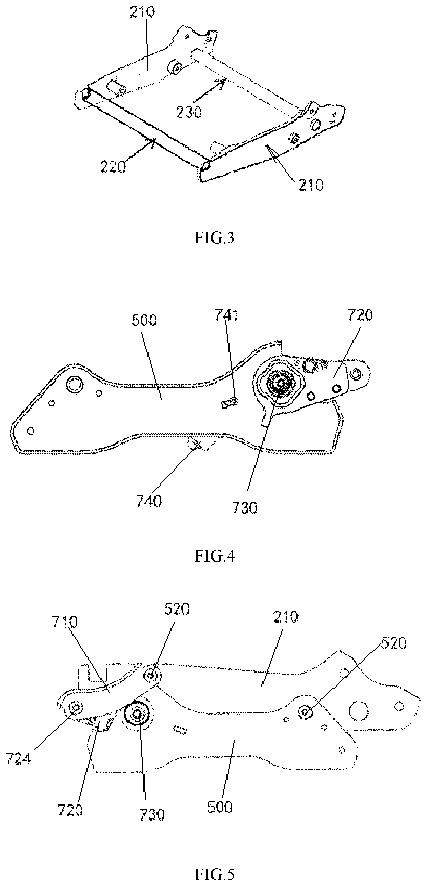

Exemplary zero-gravity seats with quick restoration during collision are shown in the drawings, which comprise a backrest and a seat cushion respectively. A zero-gravity seat according to the present invention can be quickly restored from a zero-gravity position or a zero-gravity posture to its initial position in a collision event, and more specifically in a collision event of a vehicle, especially a passenger vehicle, equipped with the zero-gravity seat. In the initial position, a seat cushion of the zero-gravity seat may have a substantially horizontal position, in other words, the seat cushion may have an inclination angle of approximately zero degree, and a backrest of the zero-gravity seat may have a substantially upright position. Soft packages of the backrest and the seat cushion are omitted in the drawings, and therefore only a backrest framework 100 of the backrest and a seat cushion framework 200 of the seat cushion are shown in the drawings. As can be seen from Figs. 1 to 3, the seat cushion framework 200 may comprise at least a pair of side plates 210, a front pipe 220 and a rear pipe 230, wherein a left and a right end of the front pipe 220 may be fixedly connected (for example, welded or riveted) with front ends of the pair of side plates 210, and a left and a right end of the rear pipe 230 may be fixedly connected (for example, welded or riveted) with rear ends of the pair of side plates 210.

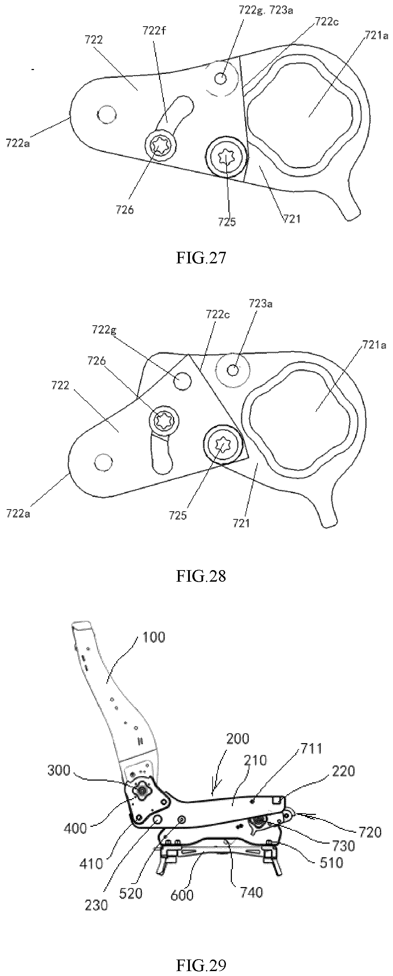

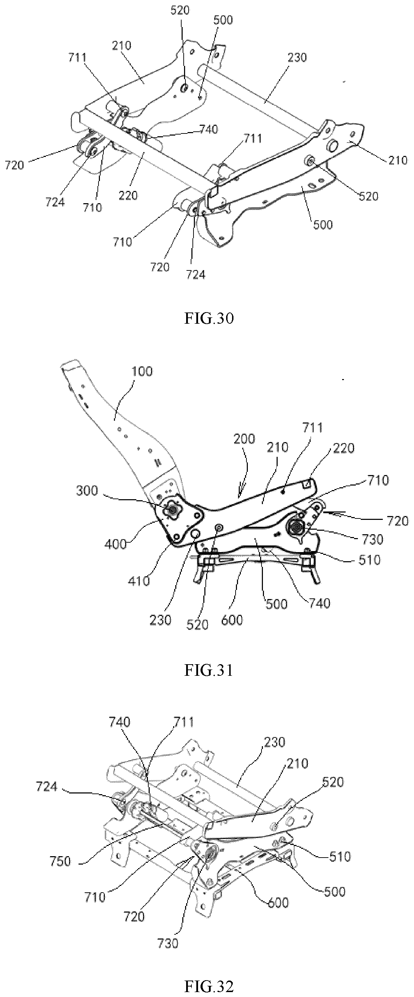

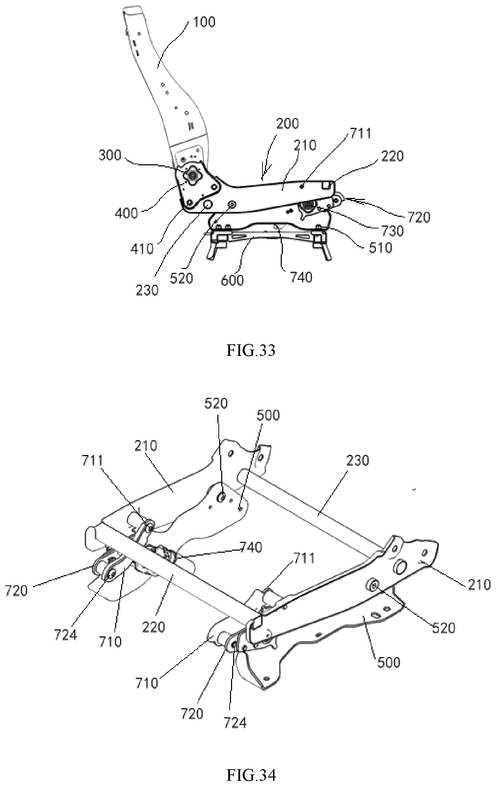

In Figs. 29, 31 and 33, the backrest framework 100 of the backrest of the zero-gravity seat is shown. The backrest framework 100 may be hinged to a pair of angle-adjuster lower connection plates 400 through seat angle adjusters 300, and the pair of angle-adjuster lower connection plates 400 are fixed to the rear ends of the pair of side plates 210 of the seat cushion framework 100 through fasteners such as screw bolts 410 respectively. An angle of the backrest relative to the seat cushion can be additionally adjusted by means of the seat angle adjusters 300.

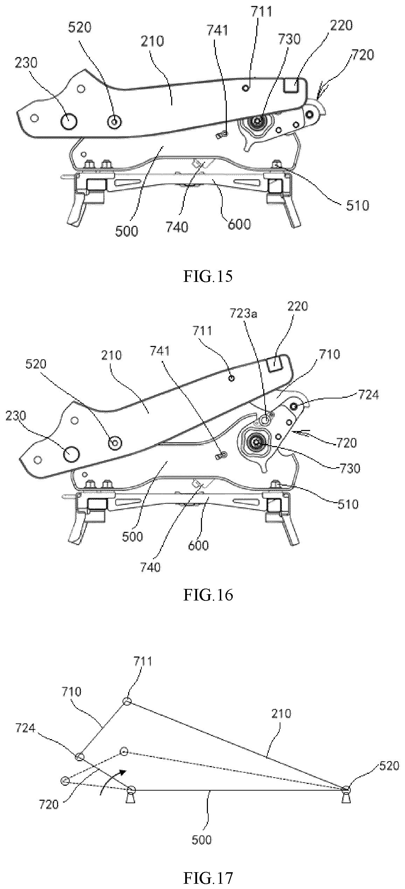

The seat cushion framework 200 may include a pair of mounting bottom plates 500, which may be fixed to a seat bracket 600 by means of a plurality of fasteners such as screw bolts 510 (see Figs. 15, 16, 18, 20, 22, 29, and 31 to 34). In an embodiment not shown, the seat cushion framework 200 may not include the pair of mounting bottom plates 500, but the seat bracket 600 itself has the function of the mounting bottom plates 500.

The zero-gravity seat shown in Figs. 1 and 2 is characterized in that, the zero-gravity seat further comprises a pair of upper links 710, a pair of composite links 720, a pair of front angle adjusters 730, an angle-adjuster motor 740 and a synchronous rod 750.

Rear ends of the pair of mounting bottom plates 500 are hinged with the respective side plates 210 at a mid-rear position of the respective side plates 210 through stepped screw bolts 520 respectively. One ends of the pair of upper links 710 are hinged with the respective side plates 210 at a mid-front position of the respective side plates 210 through stepped screw bolts 711 respectively. The pair of upper links 710 and the pair of composite links 720 are respectively arranged between one of the side plates 210 and one of the mounting bottom plates 500 in a bilaterally symmetrical manner, wherein the other ends of the pair of upper links 710 are hinged with one ends of the respective composite links 720, and the other ends of the pair of composite links 720 are hinged with the respective mounting bottom plates 500. When each composite link 720 is regarded as an integral rigid link, the mounting bottom plates 500, the composite links 720, the upper links 710 and the side plates 210 form a four-link mechanism.

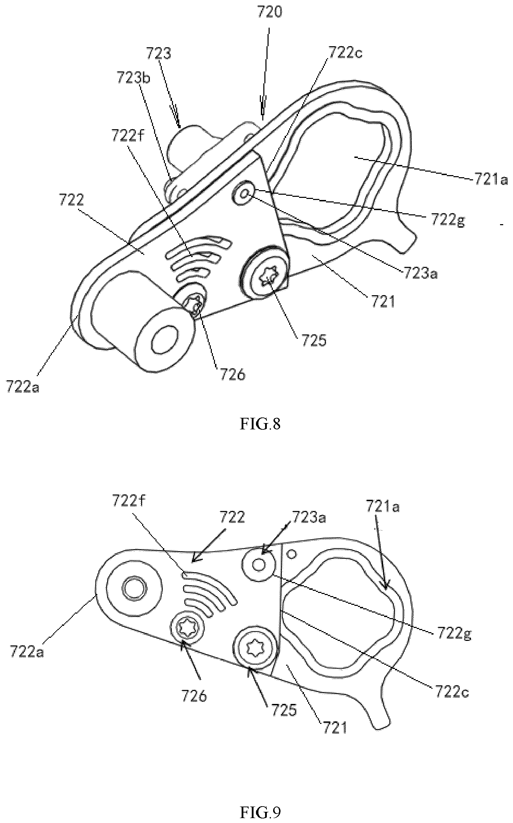

As shown in Figs. 8 to 10, the pair of composite links 720 may each include a basic link 721, an energy-absorbing link 722 and a locking and unlocking mechanism 723.

In order to hinge the pair of composite links 720 with the respective mounting plates 500, a second angle-adjuster hole 721a may be provided at a first end of each basic link 721, and a first angle-adjuster hole 530 may be provided at the front end of each mounting bottom plate 500 (see Fig. 1). Each front angle adjuster 730 is, with its one axial end, mounted into the second angle-adjuster hole 721a and anchored or welded to the respective basic link 721, and is, with its other axial end, mounted into the first angle-adjuster hole 530 and anchored or welded to the respective mounting bottom plate 500, so that each basic link 721 is hinged with the respective mounting bottom plate 500 through one of the front angle adjusters 730. The angle of relative rotation between the basic links 721 and the mounting bottom plates 500 can be adjusted by means of the front angle adjusters 730.

As shown in Figs. 8 to 11, each energy-absorbing link 722 is a part with a certain length, wherein the two opposite ends in a length direction of the energy-absorbing link 722 are a first end 722a and a second end 722c of the energy-absorbing link 722.

The first end 722a of the energy-absorbing link 722 may be hinged with the other end of the respective upper link 710 through a first stepped screw bolt 724, so that the energy-absorbing link 722 is rotatable relative to the upper link 710.

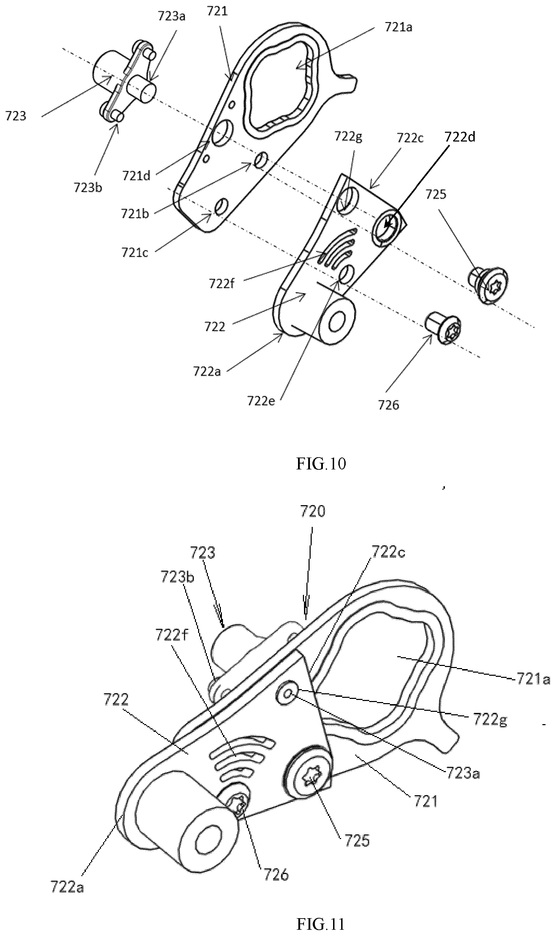

In the composite link 720, the basic link 721 may be connected with the energy-absorbing link 722 in such manner that the energy-absorbing link 722 may be provided with a shaft hole 722d (see Fig. 10) at a lower position of the second end 722c, and the basic link 721 may also be provided with a shaft hole 721b at an appropriate position in the middle of the basic link 721. When the energy-absorbing link 722 overlaps with the basic link 721, and the shaft hole 722d is aligned with the shaft hole 721b, a second stepped screw bolt 725 may be inserted into both the shaft hole 722d and the shaft hole 721b and anchored, so that the second end 722c of the energy-absorbing link 722 is hinged with the basic link 721 at a middle position of the basic link 721. In this way, after the energy-absorbing link 722 is unlocked by the locking and unlocking mechanism 723, which will be explained in more detail, the energy-absorbing link 722 and the basic link 721 can rotate relative to each other about the second stepped screw bolt 725.

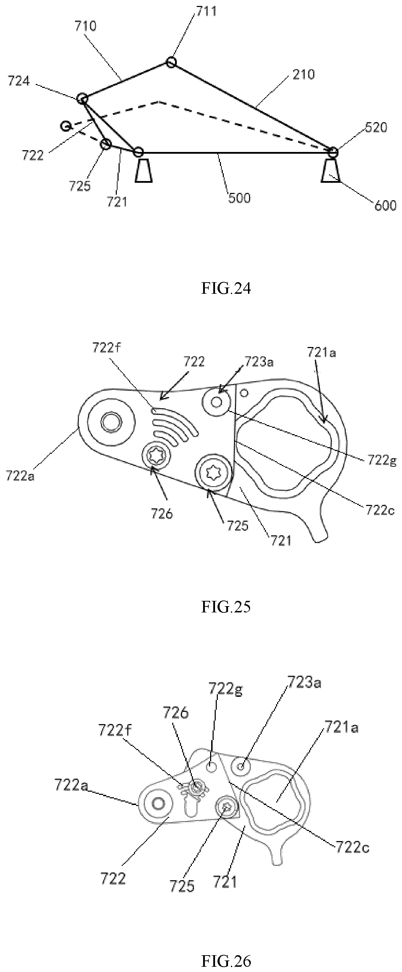

Now, an energy-absorbing structure of the composite link 720 shown in Figs. 8 to 11 is introduced. A through hole 722e for an energy-absorbing screw bolt is provided at a mid-lower position of the energy-absorbing link 722, and the energy-absorbing structure 722f is arranged at a middle position of the energy-absorbing link 722, wherein the energy-absorbing structure 722f is arranged above the through hole 722e for the energy-absorbing screw bolt. The energy-absorbing structure 722f may be a tearable energy-absorbing structure (see Figs. 8, 9, 10, 11, 13, 19, 21, 23, 25 and 26). In other embodiments, the energy-absorbing structure may also be a squeezable energy-absorbing structure (see Figs. 27 and 28).

The second end of the basic link 721 is provided with a mounting screw hole 721c for the energy-absorbing screw bolt. After the energy-absorbing link 722 and the basic link 721 are superposed and the through hole722e for the energy-absorbing screw bolt is aligned with the mounting screw hole 721c for the energy-absorbing screw bolt, the energy-absorbing screw bolt 726 passes through the through hole 722e for the energy-absorbing screw bolt and is screwed into the mounting screw hole 721c for the energy-absorbing screw bolt. During a relative rotation of the basic link 721 and the energy-absorbing link 722 about the second stepped screw bolt 725 after the energy-absorbing link 722 is unlocked by the locking and unlocking mechanism 723, the energy-absorbing screw bolt 726 interacts with the energy-absorbing structure 722f to enable energy absorption by the energy-absorbing structure. With reference to an axis of the through hole 722e for the energy-absorbing screw bolt, the energy-absorbing structure 722f includes a plurality of arc-shaped tabs and a plurality of arc-shaped grooves, which alternate with each other in a radial direction. With an increase of the distance to the axis of the through hole 722e for the energy-absorbing screw bolt, these arc-shaped tabs and arc-shaped grooves have gradually increasing arc lengths. When the basic link 721 and the energy-absorbing link 722 rotate relative to each other about the second stepped screw bolt 725 in a collision event, the energy-absorbing screw bolt 726 carried by the basic link 721 squeezes and breaks these arc-shaped tabs successively, wherein the energy is absorbed during squeezing the arc-shaped tabs.

In another embodiment of a composite link as shown in Figs. 27 and 28, an energy-absorbing structure may be formed as a squeezable energy-absorbing structure, specifically, the energy-absorbing structure 722f may be configured as a slot with a width smaller than a diameter of an energy-absorbing screw bolt 726. During a relative rotation of the basic link 721 and the energy-absorbing link 722 about the second stepped screw bolt 725 in a collision event, the energy-absorbing screw bolt 726 moves from one end of the slot to the other end of the slot, so that the slot is plastically deformed and widened. Energy is absorbed during the plastic deformation of the slot.

In an embodiment not shown, the energy-absorbing screw bolt may be generally referred as a squeezing element. The squeezing element may also be, for example, a pin welded on the basic link.

In an embodiment not shown, an inverse arrangement of the energy-absorbing screw bolt or the squeezing element and the energy-absorbing structure is also possible, wherein the energy-absorbing screw bolt or the squeezing element is carried by the energy-absorbing link, and the energy-absorbing structure is arranged in the basic link. During the relative rotation of the basic link 721 and the energy-absorbing link 722 about the second stepped screw bolt 725 in a collision event, the energy-absorbing screw bolt or the squeezing element carried by the energy-absorbing link moves in the energy-absorbing structure carried by the basic link.

In an embodiment not shown, a basic link 721 may have a squeezing element, which may have a blade; and an energy-absorbing link 722 may have a material area serving as an energy-absorbing structure. In a collision event, starting from a zero-gravity posture of a zero-gravity seat, after a locking and unlocking mechanism unlocks the energy-absorbing link, the basic link and the energy-absorbing link rotate relative to each other, wherein the blade of the squeezing element of the basic link 721 cuts the material area of the energy-absorbing link 722, whereby the material area acts as the energy-absorbing structure for energy absorption, and thus the zero-gravity seat can be quickly restored to its initial position.

The locking and unlocking mechanism 723 of the composite link 720 is now introduced with reference to Figs. 8 to 15. The basic link 721 may be provided with a mounting position for the locking and unlocking mechanism 723 at a middle position of the basis link, and a through hole 721d for a piston-type lock tongue 723a may be provided in the mounting position. A lock hole 722g may be provided at an upper position of the second end 722c of the energy-absorbing link 722, which lock hole 722g is arranged above the shaft hole 722d.

The locking and unlocking mechanism 723 is fixed to the mounting position for the locking and unlocking mechanism in the basic link 721 by fasteners such as two screw bolts 723b. In a locking state, the piston-type lock tongue 723a of the locking and unlocking mechanism 723 passes through the through hole 721d of the basic link 721 and is inserted into the lock hole 722g of the energy-absorbing link 722, thereby locking the energy-absorbing link 722 with the basic link 721 and preventing the relative rotation between the energy-absorbing link and the basic link about the second stepped screw bolt 725. Therefore, it can be ensured that the composite link 720 can move integrally under normal circumstances.

If unlocking is required, the locking and unlocking mechanism 723 may be activated to retreat the piston-type lock tongue 723a from the lock hole 722g for unlocking the basic link 721 from the energy-absorbing link 722. The piston-type lock tongue 723a of the locking and unlocking mechanism 723 may be driven by a high-pressure gas generated by ignition, or by an electric push-pull mechanism, a pneumatic push-pull mechanism, or an electromagnetic mechanism. These drive variants are known in the prior art.

In the embodiments shown, the front angle adjusters 730 may be adjusted by manual unlocking or by electric unlocking. In order to enable a synchronous movement of the two front angle adjusters 730, the two front angle adjusters 730 may be connected through a synchronous rod 750 to achieve a synchronous rotation of the two front angle adjusters 730.

If the pair of front angle adjusters 730 are adjusted by electric unlocking, the synchronous rod 750 may be driven rotatably by an angle-adjuster motor 740, wherein the rotating synchronous rod 750 can bring the two front angle adjusters 730 into a synchronous rotation. The angle-adjuster motor 740 may be mounted on one of the side plates 210 of the seat cushion framework 200 through screw bolts 741.

The working principle of the zero-gravity seat according to the embodiments of the present invention may be as below:
Referring to Figs. 11, 12 and 15 - 17, when the locking and unlocking mechanism 723 is in the locking state, the piston-type lock tongue 723a of the locking and unlocking mechanism 723 is inserted into the lock hole 722g, thereby locking the energy-absorbing link 722 with the basic link 721, and preventing the relative rotation between the energy-absorbing link 722 and the basic link 721 about the second stepped screw bolt 725, so as to ensure that the composite link 720 can keep stable and move as one piece under normal circumstances, wherein the side plates 210, the upper links 710, the composite links 720 and the mounting bottom plates 500 form a four-link mechanism.

When adjustment of the seat posture of the whole zero-gravity seat is expected, the angle-adjuster motor 740 may be activated, and then it drives the synchronous rod 750 to rotate, wherein the rotating synchronous rod 750 brings the two front angle adjusters 730 into a synchronous movement, thereby enabling the composite links 720 to rotate. The zero-gravity seat can be adjusted between the initial position as shown in Fig. 15 and the zero-gravity position as shown in Fig. 16. Upon adjustment of the zero-gravity seat from the initial position as shown in Fig. 15 to the zero-gravity position as shown in Fig. 16, the composite links 720 drive the four-link mechanism comprising the side plates 210, the upper links 710, the composite links 720 and the mounting bottom plates 500 to move backward, and thus the adjustment towards the zero-gravity posture is achieved.

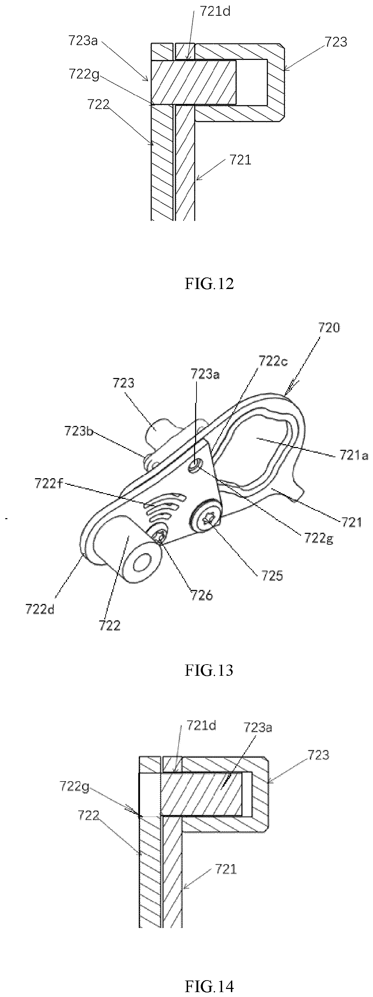

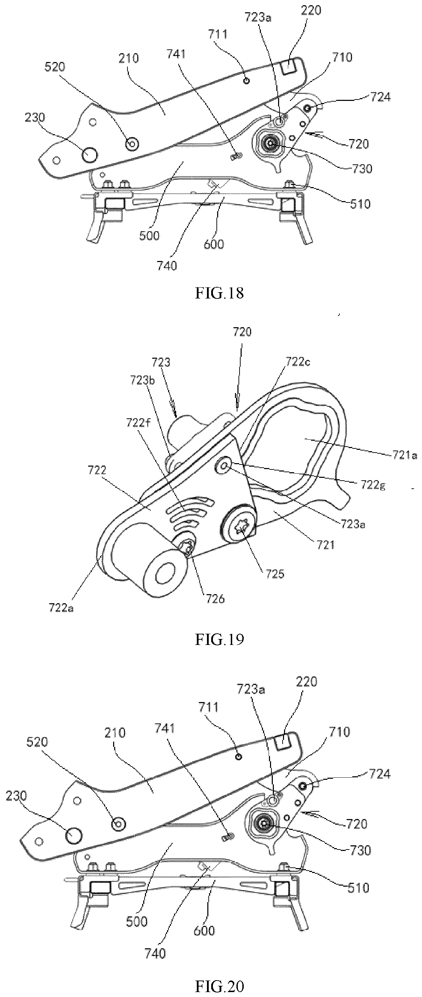

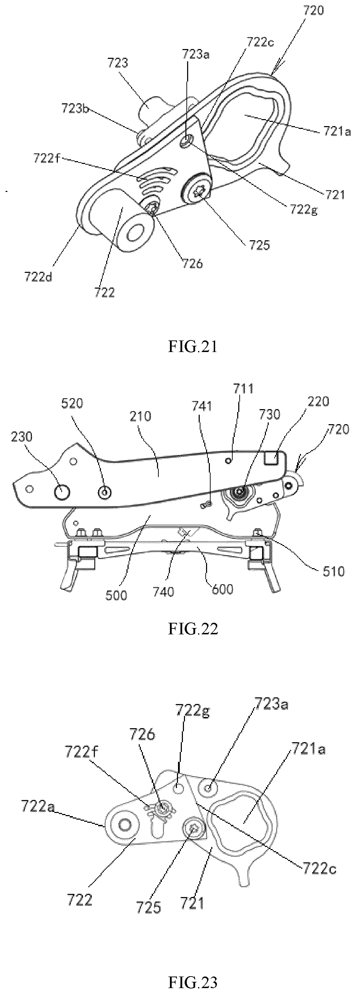

Referring to Figs. 13, 14 and 18-24, starting from the zero-gravity posture as shown in Fig. 18, when a collision occurs to the vehicle mounted with the zero-gravity seat, an ECU may send out an instruction to cause an unlocking action of the locking and unlocking mechanism 723, wherein the piston-type lock tongue 723a of the locking and unlocking mechanism 723 may be retreated from the lock hole 722g of the energy-absorbing link 722 under the drive of, for example, an electric push-pull mechanism, a pneumatic push-pull mechanism or an electromagnetic mechanism, to unlock the energy-absorbing link 722. At this time, the composite link 720 is in a starting state shown in Fig. 21. After the energy-absorbing link 722 is unlocked, the energy-absorbing link 722 and the basic link 721 are connected only by the second stepped screw bolt 725 and the energy-absorbing screw bolt 726.

Then under the action of downward impact force (see Fig. 20) on the seat cushion framework 200, wherein the impact force is transmitted to the energy-absorbing link 722, the composite link 720 can no longer keep stable. As the energy-absorbing link 722 and the basic link 721 are connected only by the second stepped screw bolt 725 and the energy-absorbing screw bolt 726, the energy-absorbing structure 722f, as a weak portion, cannot bear the corresponding force, as a result that the energy-absorbing link 722 can rotate about the second stepped screw bolt 725, that is to say, the basic link 721 and the energy-absorbing link 722 of the composite link 720 can rotate relatively about the second stepped screw bolt 725. At this time, the side plates 210, the upper links 710, the basic links 721, the energy-absorbing links 722 and the mounting plates 500 form a five-bar mechanism (see Figs. 23, 24, 27 and 28).

During the rotation of the energy-absorbing link 722 relative to the basic link 721, the energy-absorbing screw bolt 726 can break the energy-absorbing structure 722f of the energy-absorbing link 722 by means of interaction of the energy-absorbing structure 722f with the energy-absorbing screw bolt 726, thereby to absorb the collision energy during the collision of the vehicle, and reduce or avoid the injury of the impact force to a passenger.

During the relative rotation of the basic link 721 and the energy-absorbing link 722 of the composite link 720, the zero-gravity seat can be quickly restored from the zero-gravity position as shown in Fig. 18 to the design position (the initial position) as shown in Fig. 22 during the collision, wherein the energy-absorbing structure can absorb the collision energy, reduce or avoid the injury to the passenger during the collision, and ensure the safety of the passenger.

It should be noted, the terms in the specification are only for the purpose of describing specific aspects, and are not used to limit the disclosure. The singular forms "a" and "the" shall include the plural forms, unless otherwise clearly indicated. It can be understood that the terms "including" and "comprising" and the like, when used in the application document, specify the existence of stated operations, elements and/or components, but do not exclude the existence or addition of one or more other operations, elements, components and/or their combinations. The term "and/or" includes all arbitrary combinations of one or more related listed items. In the description of the drawings, the same reference numerals always indicate the same elements.

The thickness of elements in the drawings may be exaggerated for clarity. In addition, it would be appreciated that if an element is referred to be on, coupled with or connected with another element, it can be directly formed on, coupled with or connected with said another element, or there may be one or more intervening elements therebetween. On the contrary, if the expressions "directly on...", "directly coupled with..." and "directly connected with ..." are used here, they means that there are no intervening elements. Other wordings, such as "between..." and "directly between...", "attached" and "directly attached", "adjacent" and "directly adjacent" and so on, which are used to describe the relationship between elements should be interpreted in a similar way.

Terms such as "top", "bottom", "above", "below", "upper" and "lower" are used here to describe the relationship of one element, layer or region with respect to another element, layer or region as shown in the drawings. It would be appreciated that these terms should also include other orientations of the device besides those shown in the drawings.

It can be understood that although the terms "first", "second" and so on may be used herein to describe different elements, these elements shall not be limited by these terms. These terms are only used to distinguish one element from another element. Therefore, a first element may be referred to as a second element without departing from the teaching of the present inventive concept.

It's understood that all the exemplary embodiments disclosed herein can be arbitrarily combined with each other. Finally, it should be pointed out, the above-mentioned embodiments are only for understanding the present invention, and are not to limit the protection scope of the present invention. For those skilled in the art, modifications can be made on the basis of these embodiments, and these modifications do not depart from the protection scope of the present invention.

## Claims

1. A zero-gravity seat with quick restoration during collision, comprising:
- a side plate (210), which is a component of a seat cushion framework (200) of the zero-gravity seat, and which is hinged position-fixedly at its mid-rear position;
**characterized in that** the zero-gravity seat further comprises:
- an upper link (710), an end of which is hinged with the side plate at a mid-front position of the side plate;
- a composite link (720), which comprises a basic link (721), an energy-absorbing link (722), a locking and unlocking mechanism (723) and an energy-absorbing structure (722f), wherein the basic link is hinged position-fixedly at a first end thereof, wherein a first end of the energy-absorbing link is hinged with the other end of the upper link, wherein the basic link is hinged with the energy-absorbing link, wherein the locking and unlocking mechanism is configured to lock and unlock the energy-absorbing link, wherein in a locking state of the locking and unlocking mechanism the energy-absorbing link is fixedly connected with the basic link, and in an unlocking state of the locking and unlocking mechanism the energy-absorbing link and the basic link are rotatable relative to each other about a hinged connection of the energy-absorbing link with the basic link, wherein in a collision event, starting from a zero-gravity posture of the zero-gravity seat, during a relative rotation of the basic link and the energy-absorbing link after the locking and unlocking mechanism unlocks the energy-absorbing link, the energy-absorbing structure absorbs energy and the zero-gravity seat is quickly restored to an initial position.

2. The zero-gravity seat with quick restoration during collision according to claim 1, **characterized in that** the zero-gravity seat further comprises a mounting bottom plate (500), which is a component of the seat cushion framework, wherein a rear end of the mounting bottom plate is hinged to the side plate at a mid-rear position of the side plate, and wherein the first end of the basic link is hinged with the mounting bottom plate.

3. The zero-gravity seat with quick restoration during collision according to claim 2, **characterized in that** the first end of the basic link is hinged with the mounting bottom plate through a front angle adjuster (730).

4. The zero-gravity seat with quick restoration during collision according to any one of claims 1 to 3, **characterized in that** one of the basic link and the energy-absorbing link is provided with the energy-absorbing structure, and the other of the basic link and the energy-absorbing link is provided with a squeezing element, wherein during the relative rotation of the basic link and the energy-absorbing link, the squeezing element carried by the other link moves into the energy-absorbing structure carried by the one link.

5. The zero-gravity seat with quick restoration during collision according to claim 3, **characterized in that** a first angle-adjuster mounting hole (530) is provided at a front end of the mounting bottom plate, and a second angle-adjuster mounting hole (721a) is provided at a first end of the basic link, wherein the front angle adjuster is, with its one axial end, mounted in the first angle-adjuster mounting hole and anchored or welded with the mounting bottom plate, and is, with its other axial end, mounted in the second angle-adjuster mounting hole and anchored or welded with the basic link.

6. The zero-gravity seat with quick restoration during collision according to any one of claims 1 to 5, **characterized in that** the first end of the energy-absorbing link is hinged with the other end of the upper link through a first stepped screw bolt (724).

7. The zero-gravity seat with quick restoration during collision according to any one of claims 1 to 6, **characterized in that** a second end of the energy-absorbing link is hinged with the basic link at a middle position of the basic link through a second stepped screw bolt (725), wherein the first end and the second end of the energy-absorbing link are two opposite ends of the energy-absorbing link in a length direction.

8. The zero-gravity seat with quick restoration during collision according to any one of claims 1 to 7, **characterized in that** the locking and unlocking mechanism is mounted at a middle position of the basic link, wherein the locking and unlocking mechanism comprises a piston-type lock tongue (723a), wherein a lock hole (722g) is provided at a second end of the energy-absorbing link, wherein in the locking state of the locking and unlocking mechanism, the piston-type lock tongue is inserted into the lock hole to lock the basic link with the energy-absorbing link, and in the unlocking state of the locking and unlocking mechanism, the piston-type lock tongue is retreated from the lock hole to unlock the basic link from the energy-absorbing link.

9. The zero-gravity seat with quick restoration during collision according to claim 8, **characterized in that** the locking and unlocking mechanism and the lock hole are arranged above a hinged connection of the energy-absorbing link with the basic link.

10. The zero-gravity seat with quick restoration during collision according to claim 4, **characterized in that** an mounting screw hole (721c) for an energy-absorbing screw bolt is provided at a second end of the basic link, and a through hole (722e) for the energy-absorbing screw bolt is provided at a middle position of the energy-absorbing link, and the energy-absorbing structure (722f) is arranged at the middle position of the energy-absorbing link, wherein the energy-absorbing screw bolt (726) passes through the through hole for the energy-absorbing screw bolt and is screwed into the mounting screw hole for the energy-absorbing screw bolt, wherein during a relative rotation of the basic link and the energy-absorbing link after the locking and unlocking mechanism unlocks the energy-absorbing link, the energy-absorbing screw bolt interacts with the energy-absorbing structure to enable energy absorption by the energy-absorbing structure.

11. The zero-gravity seat with quick restoration during collision according to claim 10, **characterized in that** the energy-absorbing structure is arranged above the through hole for the energy-absorbing screw bolt.

12. The zero-gravity seat with quick restoration during collision according to any one of claims 1 to 10, **characterized in that** the energy-absorbing structure is a tearable energy-absorbing structure or a squeezable energy-absorbing structure.

13. The zero-gravity seat with quick restoration during collision according to claim 4, **characterized in that** the energy-absorbing structure comprises a plurality of arc-shaped tabs and a plurality of arc-shaped grooves which alternate with each other, wherein during a relative rotation of the basic link and the energy-absorbing link, the squeezing element carried by the other link squeezes and breaks the arc-shaped tabs sequentially.

14. The zero-gravity seat with quick restoration during collision according to claim 4, **characterized in that** the energy-absorbing structure comprises a slot with a width smaller than a diameter of the squeezing element, wherein during a relative rotation of the basic link and the energy-absorbing link, the squeezing element carried by the other link squeezes and deforms the slot, and thus the width of the slot is enlarged.

15. The zero-gravity seat with quick restoration during collision according to claim 2 or 3, **characterized in that** the rear end of the mounting bottom plate is hinged with the side plate at a mid-rear position of the side plate through a third stepped screw bolt (520).

16. The zero-gravity seat with quick restoration during collision according to claim 2 or 3, **characterized in that** the number of the side plates is two, wherein the two side plates are arranged in the seat cushion framework in a bilaterally symmetrical manner; the number of the mounting bottom plates is two, wherein the two mounting bottom plates are fixed to a seat bracket in a bilaterally symmetrical manner; wherein the two side plates are connected at their rear ends through a rear pipe, and the two side plates are connected at their front sides through a front pipe; the number of the upper links is two, and the number of the composite links is two, wherein the two upper links and the two composite links are respectively arranged between one of the side plates and one of the mounting bottom plates in a bilaterally symmetrical manner.

17. The zero-gravity seat with quick restoration during collision according to claim 16, **characterized in that** the first end of the basic link of each composite link is hinged with the respective mounting bottom plate through one of the front angle adjusters, wherein the two front angle adjusters are connected through a synchronous rod for a synchronous rotation of the two front angle adjusters.

18. The zero-gravity seat with quick restoration during collision according to claim 17, **characterized in that** the synchronous rod is driven rotatably by an angle-adjuster motor (740), wherein the two front angle adjusters are driven to rotate synchronously by the synchronous rod.
